# EUROPÄISCHE PATENTANMELDUNG

(11) **EP 0 577 019 A1**
(43) Veröffentlichungstag der Anmeldung: **05.01.1994**
(21) Anmeldenummer: 93110172.9
(22) Anmeldetag: 25.06.1993
(51) Int. Cl.: C01C 1/24, C01C 1/02, C22C 37/10

(54) **Verfahren zur thermischen Spaltung von Ammoniumsulfat in Ammoniak und Ammoniumhydrogensulfat**

(30) Priorität: 03.07.1992 DE 4221874
(71) Anmelder: BASF Aktiengesellschaft, D-67063 Ludwigshafen (DE)
(72) Erfinder: Fuchs, Hugo, Dr., D-6700 Ludwigshafen (DE); Hoppe, Klaus-Dieter, Dr., D-6706 Wachenheim (DE); Leutner, Bernd, Dr., D-6710 Frankenthal (DE); Simon, Joachim, Dr., D-6800 Mannheim 1 (DE)

(57) **Zusammenfassung**

Verfahren zur thermischen Spaltung von Ammoniumsulfat in Ammoniak und Ammoniumhydrogensulfat im Temperaturbereich von 300 bis 450°C, wobei als Reaktor-Werkstoff ganz oder überwiegend Silicium-Eisen-Guß oder Silicium-Eisen-Guß-Legierungen eingesetzt werden.

## Beschreibung

Die vorliegende Erfindung betrifft ein Verfahren zur thermischen Spaltung von Ammoniumsulfat in Ammoniak und Ammoniumhydrogensulfat.

Ammoniumsulfat fällt in sehr großen Mengen als Koppelprodukt bei der Herstellung von Caprolactam an. Nach dem Stand der Technik wird dieses Ammoniumsulfat durch Umkristallisation gereinigt und unter knapper Deckung der Einsatzstoffkosten für Ammoniak und Schwefelsäure als Düngemittel verwertet.

Durch die Spaltung von Ammoniumsulfat in Ammoniak und Ammoniumhydrogensulfat in einer dafür geeigneten Apparatur werden dagegen zwei Produkte erhalten, die sich in die Synthese von Caprolactam zurückführen lassen. Dabei kann das aus dem Spaltprozeß erhaltene Ammoniak sowohl als Neutralisationsmittel bei der sogenannten sauren Oximierung, als auch in der Aufarbeitung nach der Beckmann-Umlagerung verwendet werden, wobei es die sonst zur Neutralisation notwendige Base teilweise ersetzt.

Ammoniumhydrogensulfat läßt sich beispielsweise anstelle von Schwefelsäure für die Synthese von Hydroxylamin oder auch für die Beckmann-Umlagerung oder sonstige Zwecke einsetzen.

Es ist bereits seit langem bekannt, daß Ammoniumsulfat in der Schmelze bei Temperaturen deutlich oberhalb von 300°C nach: 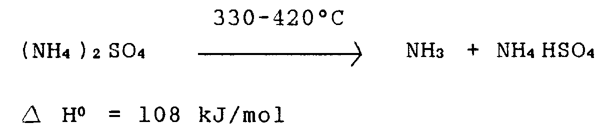
in Ammoniak und Ammoniumhydrogensulfat zerfällt (Gmelin, Handbuch der anorganischen Chemie, 8. Auflage, Berlin 1936, S. 26lff.). Auch Verfahren zur Durchführung dieser Spaltung sind bereits mehrfach bekannt geworden. So wird beispielsweise nach dem US-Patent 3 911 092 eine schmelzflüssige Lösung von Ammoniumsulfat in Ammoniumhydrogensulfat in einer Venturi-Düse mit Luft und Treibstoff innig vermischt und durch die heißen Verbrennungsgase bei Temperaturen oberhalb von 315°C zersetzt. Dem Patent US 3 929 977 zufolge wird eine Mischung aus ²/₃ Ammoniumhydrogensulfat und ¹/₃ Ammoniumsulfat zunächst aufgeschmolzen und anschließend bei einer Temperatur von 270 bis 300°C in einem Dünnfilmverdampfer unter Strippen mit Verbrennungsgasen oder überhitztem Wasserdampf zersetzt. Die Strippgase haben eine Eintrittstemperatur von 350 bis 550°C, die Austrittstemperatur soll nicht über 330°C liegen.

In dem Patent FR 2 370 694 wird eine zwei- oder mehrstufige Kaskade beschrieben, in deren erste Stufe festes Ammoniumsulfat über eine Schnecke in eine 310 bis 345°C heiße Schmelze von Ammoniumhydrogensulfat dosiert wird. Die Schmelze wird mit überhitztem Wasserdampf gestrippt, der im Gegenstrom alle Stufen, einschließlich der ersten passiert und das bei der Reaktion freiwerdende Ammoniak austreibt.

Während somit die prinzipielle Durchführung einer Spaltung von Ammoniumsulfat gelöst ist, scheitert deren technische Realisierung an der bisher ungelösten Werkstofffrage. Bei den notwendigen Temperaturen oberhalb von 300°C ist flüssiges Ammoniumhydrogensulfat, zumal in Gegenwart von Wasserdampf, außerordentlich korrosiv und zerstört die meisten metallischen Werkstoffe innerhalb von Stunden.

In den oben aufgeführten Literaturstellen werden als brauchbare Werkstoffe nur Glas oder saure Silikate genannt, die schlecht zu verarbeiten sind und sich aufgrund ihrer mangelnden mechanischen Belastbarkeit nur für den Labormaßstab, nicht aber für den Bau technischer Apparate eignen. Um die thermische Spaltung von Ammoniumsulfat in einen technischen Maßstab übertragen zu können, wird daher ein Material benötigt, das mechanisch stabil ist, eine gute Wärmeleitfähigkeit aufweist, damit die Schmelze indirekt beheizt werden kann, und das vor allem unter den Reaktionsbedingungen gegen die extrem aggressive Schmelze in Kombination mit überhitztem Wasserdampf chemisch hinreichend beständig ist.

Gemäß der Erfindung wurde nun gefunden, daß Silicium-Eisen-Guß und Legierungen dieses Materials, insbesondere solche mit Chrom und Molybdän, in geschmolzenem Ammoniumhydrogensulfat und in Gegenwart von überhitztem Wasserdampf bei Temperaturen bis über 400°C hervorragend beständig sind. Besonders bewährt haben sich Silicium-Eisen-Guß-Legierungen mit 15 bis 20 Gew.-% Silicium und zusätzlich rund 5 Gew.-% Chrom. Dieses Ergebnis ist für den Fachmann überraschend und war nicht vorhersehbar, da Eisen bekanntermaßen nicht gegen Säuren beständig ist, und die schützende Schicht aus Siliciumdioxid auf dem Silicium-Eisen-Guß von überhitztem Dampf angegriffen werden sollte. Möglicherweise schützt die Salzschmelze den Silicium-Eisen-Guß vor einem direkten Kontak mit dem Wasserdampf, so daß sich oberflächlich eine gegen die Schmelze beständige Schutzschicht aus Siliciumdioxid ausbilden kann. Untersuchungen der Oberfläche zeigen eine Anreicherung von Siliciumdioxid und entsprechend eine Verarmung an Eisen. Hiermit übereinstimmend beobachtet man eine allmähliche Abnahme der linearen Abtragsraten.

Obwohl Silicium-Eisen-Guß nicht einfach zu verarbeiten ist, erlaubt der Stand der Technik die Fertigung der zur Durchführung des erfindungsgemäßen Verfahrens erforderlichen chemisch-technischen Apparate, die für eine technische Realisierung der thermischen Spaltung von Ammoniumsulfat in der Schmelze notwendig sind.

### Beispiele

Materialproben für geeignete Reaktor-Werkstoffe zur Durchführung des erfindungsgemäßen Verfahrens wurden jeweils bei 380°C unter Einblasen von 400°C heißem Wasserdampf in einer bewegten Schmelze von Ammoniumhydrogensulfat gehalten.
1. Silicium-Eisen-Guß, unlegiert:

| Zeit [h] | lineare Abtragsrate [mm/a] |
|---|---|
| 33 | 0,42 |
| 204 | 0,21 |
| 375 | 0,21 |
| 732 | 0,22 |
| 1037 | 0,26 |

2. Silicium-Eisen-Guß, legiert mit 3 Gew.-% Molybdän:

| Zeit [h] | lineare Abtragsrate [mm/a] |
|---|---|
| 33 | 0,34 |
| 204 | 0,20 |
| 375 | 0,23 |
| 732 | 0,17 |
| 1037 | 0,13 |
| 1365 | 0,13 |

3. Silicium-Eisen-Guß, legiert mit 5 Gew.-% Chrom:

| Zeit [h] | lineare Abtragsrate [mm/a] |
|---|---|
| 204 | 0,03 |
| 375 | 0,04 |
| 732 | 0,03 |
| 1037 | 0,02 |
| 1365 | 0,01 |

## Patentansprüche

1. Verfahren zur thermischen Spaltung von Ammoniumsulfat in Ammoniak und Ammoniumhydrogensulfat im Temperaturbereich von 300 bis 450°C, dadurch gekennzeichnet, daß als Reaktor-Werkstoff ganz oder überwiegend Silicium-Eisen-Guß oder Silicium-Eisen-Guß-Legierungen eingesetzt werden.

2. Verfahren nach Anspruch 1, dadurch gekennzeichnet, daß die Silicium-Eisen-Guß-Legierungen mit Chrom oder Molybdän legiert sind.

3. Verfahren nach Anspruch 1 und 2, dadurch gekennzeichnet, daß die Silicium-Eisen-Guß-Legierung 15 bis 20 Gew.-% Silicium und 5 Gew.-% Chrom enthält.
